# EUROPÄISCHE PATENTSCHRIFT

(11) **EP 2 245 436 B1**
(45) Veröffentlichungstag und Bekanntmachung des Hinweises auf die Patenterteilung: **10.08.2011**
(21) Anmeldenummer: 08872530.4
(22) Anmeldetag: 04.12.2008
(51) Int. Cl.: G01L 5/22, B62D 5/04

(54) **SENSORANORDNUNG FÜR ELEKTRISCHE SERVOLENKUNGEN**
SENSOR ARRANGEMENT FOR ELECTRIC POWER STEERING SYSTEMS
AGENCEMENT DE CAPTEURS POUR DISPOSITIFS DE DIRECTION ASSISTÉE ÉLECTRIQUE

(30) Priorität: 20.02.2008 DE 102008010181
(43) Veröffentlichungstag der Anmeldung: 03.11.2010
(73) Patentinhaber: ThyssenKrupp Presta Aktiengesellschaft, 9492 Eschen (LI)
(72) Erfinder: STOLZENBURG, Jens, 74360 Ilsfeld-Auenstein (DE); KIRCHNER, Franz, 72654 Neckartenzlingen (DE)
(74) Vertreter: Lenzing Gerber Stute
(86) Internationale Anmeldenummer: PCT/EP2008/010276
(87) Internationale Veröffentlichungsnummer: WO 2009/103324

(56) Entgegenhaltungen:
- EP-A- 1 886 895
- EP-A- 1 918 175
- DE-A1-102005 018 293
- DE-A1-102007 025 200

## Beschreibung

Die vorliegende Erfindung betrifft ein Verfahren zur Montage einer Servolenkung.

Bei Servolenkungen wird üblicherweise das vom Fahrer in die Lenksäule eingeleitete Drehmoment gemessen und etwa proportional zum Drehmoment wird dann eine Hilfskraft zur Verfügung gestellt, die das Lenken vereinfacht. Bei hydraulischen Servolenkungen wird dieses Drehmoment über ein Drehschieberventil ermittelt, das von einem Drehstab als Torsionsfeder in der Neutralstellung gehalten wird. Drehmomentfrei wird das Ventil dann von dem Drehstab in diese Mittellage zurück gestellt, in der keine Hilfskraft erzeugt werden soll. Bei elektrischen Servolenkungen sind Drehmoment- oder Drehwinkelsensoren erforderlich, die analog zu der hydraulischen Variante im drehmomentfreien Fall ein möglichst geringes Signal ausgeben, damit die nachgeschaltete Elektronik den Servoantrieb entsprechend stromlos machen kann.

Eine mögliche Bauart eines solchen Sensors hat einen mit der Lenksäule drehfest verbundenen Eingangsteil, einen mit einem Lenkritzel drehfest verbundenen Ausgangsteil und einen diese beiden Teile verbindenden Drehstab. Auf jeweils einem Teil sitzt ein Magnetfeldsensor, während auf dem jeweils anderen Teil ein Magnet angeordnet ist. Siche zum Beispiel das Dokument DE 102005018293. Die Befestigung dieser beiden Sensorbauteile und insbesondere ihre präzise Positionierung zueinander bestimmt die Sensorcharakteristik der gesamten Anordnung. Bislang wurden diese Sensorbauteile unlösbar mit den Lenkungskomponenten verbunden. Im Falle einer Fehlfunktion waren die Sensorbauteile verloren.

Es ist deshalb Aufgabe der vorliegenden Erfindung, ein Verfahren zur Montage einer elektrischen Servolenkung zur Verfügung zu stellen, die eine Nachjustage und gegebenenfalls eine Zerlegung und Neumontage der Sensorbauteile ermöglicht.

Diese Aufgabe wird von einem Verfahren mit den Merkmalen des Anspruchs 1 gelöst.

Weil bei einem Drehmoment- und/oder Drehwinkelsensor für eine elektrische Servolenkung eines Kraftfahrzeugs, mit einer Eingangswelle, einem Drehstab und einer Ausgangswelle, wobei die Eingangswelle ein erstes Sensorelement und die Ausgangswelle ein zweites Sensorelement tragen und das erste Sensorelement und das zweite Sensorelement in Abhängigkeit von einem zwischen der Eingangswelle und der Ausgangswelle wirkenden Drehmoment gegeneinander um einen Drehwinkel verlagerbar sind, vorgesehen ist, dass wenigstens eines der Sensorelemente mit einem Toleranzring auf der Eingangswelle und/oder auf der Ausgangswelle befestigt ist, können die Sensorelemente bei einem im Laufe der Funktionsprüfung festgestellten Fehler von dem Toleranzring abgezogen und weiter verwendet werden.

Wenn der wenigstens eine Toleranzring in einer von außen eingestochenen umlaufenden Nut angeordnet ist, ist eine axiale Fixierung für Montagezwecke einfach erreichbar. Wenn weiter das erste Sensorelement mit dem Toleranzring im Bereich eines freien Endes der Eingangswelle montiert ist und das zweite Sensorelement mit dem Toleranzring im Bereich eines freien Endes der Ausgangswelle montiert ist, welches dem freien Ende der Eingangswelle unmittelbar gegenüber liegt, so dass das erste Sensorelement und das zweite Sensorelement einander unter Bildung eines Luftspaltes ebenfalls gegenüber liegen, ist ein vorteilhaftes Sensorsignal zu erwarten.

Weil ein Verfahren zur Montage einer elektrischen Servolenkung folgende Schritte aufweist:
a) Erstellen einer Baugruppe aus einer Eingangswelle (1), einem mit der Eingangswelle (1) einseitig drehfest verbundenen Drehstab (2) und einer anderseitig drehfest mit dem Drehstab (2) verbundenen Ausgangswelle (3),
b) Montieren wenigsten eines Toleranzrings (15, 18) auf der Eingangswelle (1) und/oder der Ausgangswelle (3),
c) Aufpressen eines ersten Sensorelements (10) auf den Toleranzring (15),
d) Positionieren des ersten Sensorelements (10) durch Ausrichten in Axialrichtung und/oder in Umfangsrichtung,
e) Aufpressen eines zweiten Sensorelements (14) auf den zweiten Toleranzring (18),
f) Positionieren des zweiten Sensorelements (14) in Axialrichtung und/oder in Umfangsrichtung,
   wird eine einfache und präzise Sensormontage erreich, wobei zusätzlich die Sensorelemente zerstörungsfrei wieder demontiert werden können.
   Wenn durch Positionieren der beiden Sensorelemente in Umfangsrichtung relativ zueinander eine elektrische Mittelstellung des Sensors eingestellt wird, ist eine weitere Verbesserung der Sensorleistung erzielbar.

Wenn nach wenigstens einem der Schritte c, d, e und f eine Funktionsprüfung durchgeführt wird und bei einem Fehler das erste Sensorelement und/oder das zweite Sensorelement von dem Toleranzring abgezogen und wiederverwendet wird, werden die Kosten für fehlerhafte Bauteile im Produktionsprozess minimiert.

Nachfolgend wird ein Ausführungsbeispiel der vorliegenden Erfindung anhand der Zeichnung näher beschrieben. Es zeigen:
- Figur 1:: eine Sensoranordnung mit montiertem Magnetfeldsen- sor und einem montierten Magnetring in einem Längs- schnitt entlang der Mittelachse; sowie
- Figur 2:: ein Flussdiagramm für die Montage einer Servolen- kung mit beispielhaften Darstellungen der Komponen- ten im jeweiligen Zusammenbauzustand.

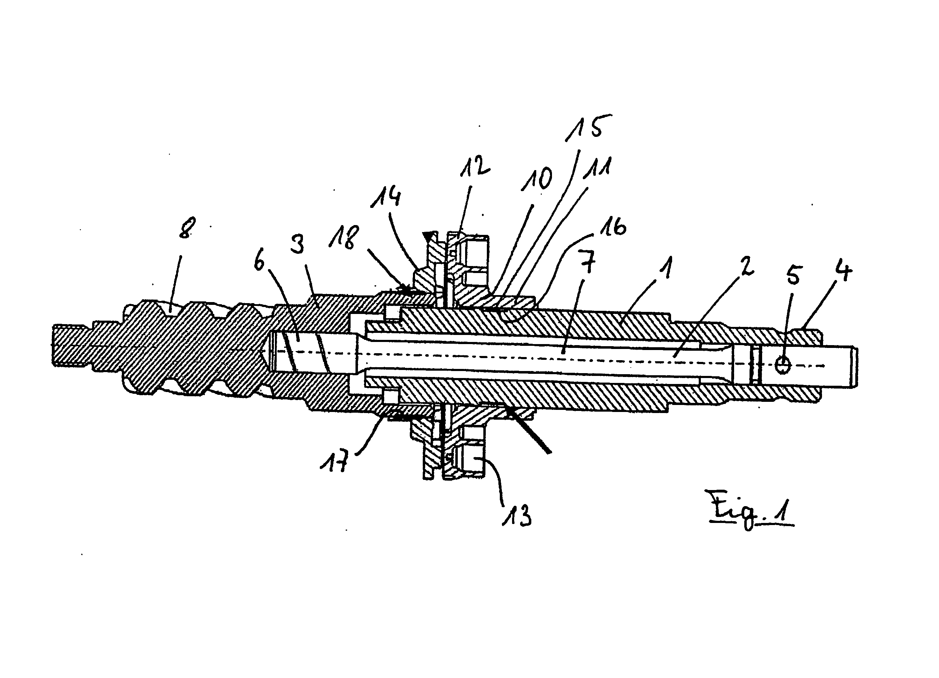

In der Figur 1 ist eine Sensoranordnung zur Erfassung eines Drehmoments in einer elektrischen Servolenkung in einem Längsschnitt dargestellt. Die Sensoranordnung weist eine Eingangswelle 1, einen Drehstab 2 und eine Ausgangswelle 3 auf. Die Eingangswelle ist mit einer Verzahnung 4 versehen, die eine drehfeste Verbindung mit einer Lenksäule eines Kraftfahrzeugs erlaubt. Der Drehstab 2 ist im Bereich der Verzahnung 4 mit der Eingangswelle 1 drehfest verbunden. Hierzu wird der Anschlussbereich des Drehstabs 2 mit der Eingangswelle 1 quer durchbohrt und ein Stift 5 eingepresst.

An seinem anderen Ende 6 ist der Drehstab 2 mit der Ausgangswelle 3 ebenfalls drehfest verbunden. Ein verjüngter Zwischenbereich 7 bildet eine Torsionsfeder, die eine Verdrehung der Eingangswelle 1 gegen die Ausgangswelle 3 erlaubt. Der relative Drehwinkel entspricht dabei dem eingeleiteten Drehmoment und der Torsionsfederkonstante des verjüngten Bereichs 7.

An ihrem dem-Drehstab 2 abgewandten Ende trägt die Ausgangswelle 3 eine Ritzelverzahnung 8, die im montierten Zustand mit einer entsprechenden Verzahnung einer Zahnstange kämmt.

Diese Anordnung ist ähnlich auch aus Drehschieberventilen für hydraulische Servolenkungen bekannt.

Zur Erzeugung eines elektrischen Drehmomentsignals, wie es für die Ansteuerung von elektrischen Servoantrieben in Servolenkungen benötigt wird, trägt die Eingangswelle 1 eine Sensoranordnung 10, die auf die Eingangswelle 1 aufgepresst ist. Die Anordnung weist einen rohrförmigen Schaft 11 auf, der einen umlaufenden Kragen 12 trägt. Der Kragen 12 ist schließlich durch Aufnahmen 13 zur Halterung von Magnetfeldsensorelementen vorbereitet.

Die Ausgangswelle 3 trägt entsprechend einen ringförmigen Magnetträger 14, der ebenfalls auf die Welle 3 aufgepresst ist und unter Bildung eines Luftspalts in einem geringen Abstand vom dem kragenförmigen Bereich 12 positioniert ist.

Zwischen dem rohrförmigen Schaft 11 und der Eingangswelle 1 ist ein Toleranzring 15 vorgesehen, der in einer umlaufenden Nut 16 der Einganswelle 1 sitzt. Ebenso trägt die Ausgangswelle 3 eine umlaufende Nut 17, in der ein Toleranzring 18 angeordnet ist.

Die Toleranzringe 15 und 18 sind einseitig offene Ringe aus einem Bandmaterial, in das nach außen weisende Vorsprünge eingeprägt sind. Die Toleranzringe sind so dimensioniert, dass die Erhebungen oder Vorsprünge, die über die bandförmige Oberfläche radial nach außen weisen, einen größeren Durchmesser begrenzen, als es der Innendurchmesser des darauf zu montierenden Bauteils ist. Solche Toleranzringe werden beispielsweise von der Rencol Tolerance Rings Ltd, Großbritannien, serienmäßig angeboten.

Bei der Montage der Bauteile 10 und 14 wird zunächst ein geeigneter Toleranzring in die Nut eingesetzt. Bei der Eingangswelle 1 wird der Toleranzring 15 in die Nut 16 eingesetzt. Das Sensorbauteil 10 wird dann auf den Toleranzring aufgepresst, welcher sich dabei verformt. Das Sensorbauteil 10 sitzt dann reibschlüssig auf der Eingangswelle 1.

Entsprechend wird zur Montage des Magnetrings 14 der Toleranzring 18 in die Nut 17 eingesetzt. Der Magnetring 14 wird dann auf den Toleranzring aufgepresst, welcher sich wiederum verformt und den Magnetring 14 reibschlüssig hält.

Die Montage dieser Bauteile erfolgt vorzugsweise auf die schon zusammengesetzte Baugruppe, die aus der Eingangswelle 1, dem Drehstab 2 und der Ausgangswelle 3 besteht.

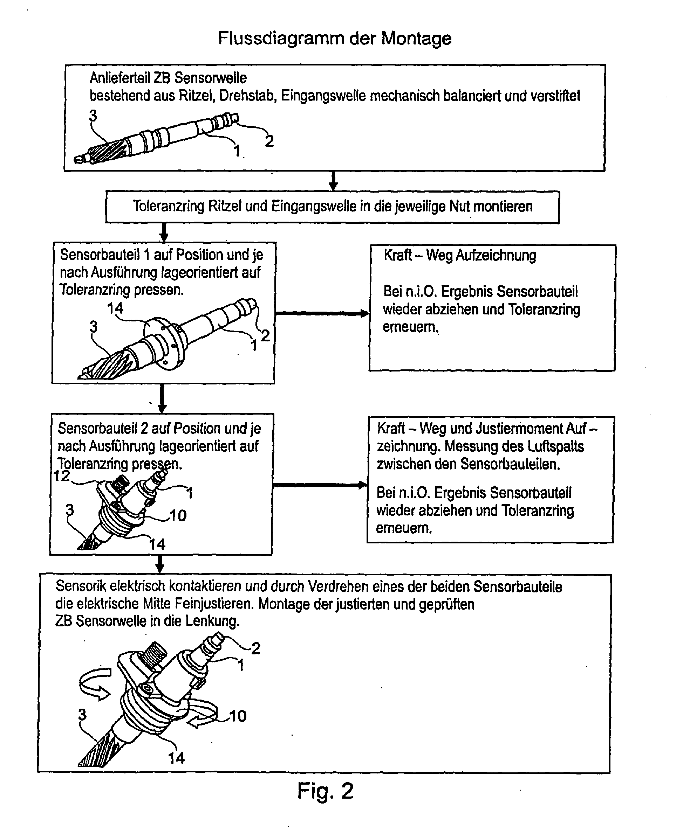

Die Montage wird nachfolgend näher anhand der Figur 2 in Form eines Flussdiagramms beschrieben.

Die Baugruppe bestehend aus der Eingangswelle 1, dem Drehstab 2 und der Ausgangswelle 3 wird in einem ersten Schritt angeliefert, wobei sie bereits in der vorgesehenen relativen Winkelposition zwischen der Eingangswelle 1 und der Ausgangswelle 3 durch Verstiften des Drehstabs 2 fixiert ist.

In einem zweiten Schritt werden die Toleranzringe 15 und 18 in die jeweiligen Nuten 16 und 17 eingesetzt.

In einem dritten Montageschritt wird der Magnetring 14 als erstes Sensorbauteil in der vorgesehenen Position und Lage auf den Toleranzring 18 aufgepresst. Nach diesem Vorgang wird eine Kraft- Weg-Messung vorgenommen, bei der der Verdrehwinkel in Abhängigkeit vom eingeleiteten Drehmoment zwischen der Eingangswelle 1 und der Ausgangswelle 3 gemessen wird. Wird bei dieser Prüfung ein Fehler festgestellt, so kann der Magnetring 14 wieder abgezogen werden. Das jeweilige fehlerhafte Bauteil kann dann ausgewechselt werden. Der Toleranzring 18 wird erneuert und der Vorgang wird wiederholt. Dieser Verfahrenschritt ist bei herkömmlichen Drehmomentsensoren nicht möglich, da ein zerstörungsfreies Abziehen und Neumontieren des Magnetrings 14 bislang nicht möglich war. Bei einem Fehler nach diesem Zusammenbauschritt war das Sensorbauteil bislang verloren.

Ist die erste Prüfung erfolgreich durchgeführt worden, so wird das zweite Sensorbauteil 10 in der vorgesehenen Winkelposition auf die Eingangswelle 1 aufgepresst, und zwar soweit, dass sich der vorgesehene Luftspalt zwischen dem Kragen 12 und dem Magnetring 14 einstellt. Jetzt wird die Kennlinie der Anordnung gemessen. Auch der Luftspalt zwischen den Sensorbauteilen 12 und 14 wird gemessene Falls hierbei nicht die Sollwerte erreicht werden, kann das Sensorbauteil 10 wieder von der Eingangswelle 1 und dem Toleranzring 15 abgezogen werden. Nach Erneuerung des Toleranzrings 15 kann das Sensorbauteil 10 erneut auf die Eingangswelle 1 aufgesetzt werden. Das Sensorbauteil 10 wird bei diesem Vorgang nicht beschädigt.

Ist die Prüfung erfolgreich verlaufen, wird die Sensorik auf dem Bauteil 10 elektrisch kontaktiert. Im drehmomentfreien Fall soll der Sensor ein Signal erzeugen, das einer Mittelstellung entspricht. Um dies zu erreichen, kann nun entweder das Bauteil 10 oder der Magnetring 14 auf der jeweiligen Welle verdreht werden, wobei weder das Sensorbauteil, noch der zwischen dem Bauteil und der zugehörigen Welle liegende Toleranzring beschädigt wird. Auf diese Weise kann bei vollständig zusammengebauter Drehmomentsensoranordnung die sogenannte elektrische Mitte fein justiert werden.

Nach dieser Justage ist der Sensor für den Einbau in eine elektrische Servolenkung vorbereitet.

Der Vorteil dieser erfindungsgemäßen Ausführung liegt in der Lösbarkeit der Verbindung zwischen den Wellen und den Sensorteilen. Die relativ teuren Sensorteile werden bei einer Demontage nicht beschädigt, da die im Presssitz entstehende Verformung ausschließlich von den Toleranzringen aufgenommen wird. Die Toleranzringe 15 und 18 sind preiswerte Bauteile, die nach einer gegebenenfalls erforderlichen Demontage des jeweiligen Sensorbauteils 10 bzw. 14 ersetzt werden können. Das Feinjustieren der elektrischen Mitte wird ebenfalls durch die Toleranzringe ermöglicht. Der Sitz der Sensorbauteile 10 bzw. 14 bleibt dabei infolge des Reibschlusses auf den Toleranzringen 15 bzw. 18 so fest, dass eine zusätzliche Fixierung durch Kleben, Schweißen oder dergleichen nicht erforderlich ist.

## Patentansprüche

1. Verfahren zur Montage einer elektrischen Servolenkung, mit folgenden Schritten:
a) Erstellen einer Baugruppe aus einer Eingangswelle (1), einem mit der Eingangswelle (1) einseitig drehfest verbundenen Drehstab (2) und einer anderseitig drehfest mit dem Drehstab (2) verbundenen Ausgangswelle (3), **gekennzeichnet durch** folgenden schritten :
b) Montieren wenigsten eines Toleranzrings (15, 18) auf der Eingangswelle (1) und/oder der Ausgangswelle (3),
c) Aufpressen eines ersten Sensorelements (10) auf den Toleranzring (15),
d) Positionieren des ersten Sensorelements (10) **durch** Ausrichten in Axialrichtung und/oder in Umfangsrichtung,
e) Aufpressen eines zweiten Sensorelements (14) auf den zweiten Toleranzring (18),
f) Positionieren des zweiten Sensorelements (14) in Axialrichtung und/oder in Umfangsrichtung.

2. Verfahren nach Anspruch 1, **dadurch gekennzeichnet, dass** durch Positionieren der beiden Sensorelemente (10, 14) in Umfangsrichtung relativ zueinander eine elektrische Mittelstellung des Drehmoment- und/oder Drehwineklsensors eingestellt wird.

3. Verfahren nach einem der vorhergehenden Ansprüche, **dadurch gekennzeichnet, dass** nach wenigstens einem der Schritte c, d, e und f eine Funktionsprüfung durchgeführt wird und bei einem Fehler das erste Sensorelement (10) und/oder das zweite Sensorelement (14) von dem Toleranzring (15, 18) abgezogen und wiederverwendet wird.

## Claims

1. Method for assembling an electric power steering system, having the following steps:
a) constructing an assembly from an input shaft (1), a torque rod (2) connected to the input shaft (1) on one side in a rotationally fixed manner and an output shaft (3) connected to the torque rod (2) on the other side in a rotationally fixed manner, **characterised by** the following steps:
b) assembling at least one tolerance ring (15, 18) on the input shaft (1) and/or the output shaft (3),
c) pressing a first sensor element (10) onto the tolerance ring (15),
d) positioning the first sensor element (10) by aligning it in the axial direction and/or in the circumferential direction,
e) pressing a second sensor element (14) onto the second tolerance ring (18),
f) positioning the second sensor element (14) in the axial direction and/or in the circumferential direction.

2. Method according to Claim 1, **characterised in that** by positioning both sensor elements (10, 14) in the circumferential direction relative to each other an electrical mid-position of the torque and/or rotation angle sensor is set.

3. Method according to any one of the preceding claims, **characterised in that** after at least one of the steps c, d, e and f a functional test is carried out and in the event of a fault the first sensor element (10) and/or the second sensor element (14) is taken off the tolerance ring (15, 18) and re-used.

## Revendications

1. Procédé de montage d'une direction assistée, électrique, comprenant les étapes suivantes :
a) constitution d'un sous-groupe composé d'un arbre d'entrée (1), d'une tige de rotation (2) liée de manière fixe en rotation, sur un côté, à l'arbre d'entrée, et d'un arbre de sortie (3) lié de manière fixe en rotation, de l'autre côté, à la tige de rotation (2),
**caractérisé par** les étapes suivantes :
b) montage d'au moins une bague de tolérance (15, 18) sur l'arbre d'entrée (1) et/ou l'arbre de sortie (3),
c) emmanchement à force du premier élément de capteur (10) sur la bague de tolérance (15),
d) positionnement du premier élément de capteur (10) par ajustement ou orientation dans la direction axiale et/ou dans la direction périphérique,
e) emmanchement à force d'un deuxième élément de capteur (14) sur la deuxième bague de tolérance (18),
f) positionnement du deuxième élément de capteur (14) dans la direction axiale et/ou dans la direction périphérique.

2. Procédé selon la revendication 1, **caractérisé en ce que** par le positionnement relatif des deux éléments de capteur (10, 14) l'un par rapport à l'autre dans la direction périphérique, on règle une position électrique médiane ou centrale du capteur de couple et/ou d'angle de rotation.

3. Procédé selon l'une des revendications précédentes, **caractérisé en ce qu'**après l'une au moins des étapes c, d, e et f, est effectué un test fonctionnel, et, dans le cas d'une erreur ou d'un défaut, le premier élément de capteur (10) et/ou le deuxième élément de capteur (14) est ou sont retirés de la bague de tolérance (15, 18) et réutilisés.
